Europäisches Patentamt

European Patent Office

Office européen des brevets

(19)

(11) Veröffentlichungsnummer : **0 116 705 B1**

# (12) EUROPÄISCHE PATENTSCHRIFT

(45) Veröffentlichungstag der Patentschrift :
**24.01.90**

(21) Anmeldenummer : **83112338.5**

(22) Anmeldetag : **08.12.83**

(51) Int. Cl.⁵ : **H 02 G 3/04**

(54) **Kabelverzweigungsabdeckung.**

(30) Priorität : **24.12.82 DE 8236378 U**

(43) Veröffentlichungstag der Anmeldung :
**29.08.84 Patentblatt 84/35**

(45) Bekanntmachung des Hinweises auf die Patenterteilung : **24.01.90 Patentblatt 90/04**

(84) Benannte Vertragsstaaten :
**AT BE CH DE FR GB IT LI NL SE**

(56) Entgegenhaltungen :
**DE--U-- 7 718 935
FR--A-- 2 249 459
FR--A-- 2 408 929
US--A-- 4 163 572**

(73) Patentinhaber : **TEHALIT Kunststoffwerk GmbH
Postfach 128
D-6751 Heltersberg/Pfalz (DE)**

(72) Erfinder : **Pollak, Gottfried, Dipl.-Ing.
Finkenweg 2
D-6757 Waldfischbach-Burgalben (DE)**

(74) Vertreter : **Patentanwälte Dipl.-Ing. F.W. Möll Dipl.-
Ing. H.Ch. Bitterich
Langstrasse 5 Postfach 2080
D-6740 Landau/Pfalz (DE)**

**Beschreibung**

Die Erfindung betrifft eine Kabelverzweigungsabdeckung für Kabeleingänge an Schaltkästen oder dergleichen.

Kabelverzweigungen erfolgen zum Beispiel am Eingang von Schaltkästen. Es wäre an sich die einfachste und auch sauberste Lösung, wenn für derartige Kabelverzweigungen im Schaltkasten selbst genügend Raum gelassen würde. Dies ist aber in der Praxis nicht durchsetzbar, weil damit eine nicht unwesentliche Vergrößerung und damit Verteuerung der Schaltkästen verbunden wäre.

Die DE-U-77 18 935 zeigt einen Kabelverteilerschrank, an dessen Sockel eine spezielle Kabeleinführungsplatte vorgesehen ist, die das Einführen mehrerer nebeneinander angeordneter Kabel verschiedensten Durchmesser in den Verteiler erlaubt. Diese Kabeleinführungsplatte besteht aus einer Frontplatte, die aus glasfaserverstärktem Kunststoff hergestellt ist und unter einem Winkel zum Innenraum geneigt ist, und wenigstens einem Verschlußschieber. Dreieckförmige Seitenwände begrenzen die Kabeleinführungsplatte. Die Befestigung der bekannten Kabeleinführungsplatte erfolgt mit Hilfe eines Flansches in einer Durchbruchsöffnung. Der Verschlußschieber besitzt eine konische Aussparung sowie zwei Langschlitze. Dank dieser Konstruktion kann die Position des Verschlußschiebers durch einfaches Verschieben an unterschiedliche Kabeldurchmesser angepaßt werden. Gleichwohl bleiben die Kabel selbst frei zugänglich ; auch bestehen durch die Formunterschiede — Kabel sind üblicherweise kreisrund, die Aussparung ist konisch — offene Zugänge zum Inneren des Kabelverteilerschrankes.

Der Erfindung liegt demgemäß die Aufgabe zugrunde, Mittel und Wege zu finden, wie solche Kabelverzweigungen mit möglichst geringem Aufwand, aber doch sicher gegen Umwelteinflüsse, wie zum Beispiel Staub, Feuchtigkeit, Ungeziefer und dergleichen, geschützt werden können. Solche Kabelverzweigungen sind ja ein verhältnismäßig empfindlicher Bereich der hier infrage stehenden Gesamtanordnungen, weil die Kabel aus einem sie umhüllenden Kabelführungskanal austreten, über ein Mehrfaches des Querschnittes des Kabelführungskanals auseinandergeführt werden und dann erst in den Schaltkasten durch eine entsprechende Anzahl von Öffnungen eingeführt werden.

Zur Lösung dieser Aufgabe wird eine Kabelverzweigungsabdeckung vorgeschlagen, die im wesentlichen aus einem Winkelprofil als Abdeckung und Konsolen zur Festlegung dieser Abdeckung im Bereich der Kabelverzweigung sowie zwei Endstücken zum seitlichen Verschluß des die Abdeckung bildenden Winkelprofils besteht.

Vorteilhafterweise ist das Winkelprofil als stranggepreßtes Kunststoffprofil ausgebildet, das in einfacher Weise auf die jeweils gewünschte Länge zugeschnitten werden kann. Ebenso läßt sich in einem Winkelschenkel sehr leicht ein Bereich ausschneiden, an dem das Ende des Kabelführungskanals ansetzt.

Für bestimmte Zwecke kann gegebenenfalls zusätzlich eine auf das Winkelstück und/oder die Konsolenaufrastbare Rückwand vorgesehen sein. Auch diese ist vorteilhafterweise als Strangpreßprofil aus Kunststoff ausgebildet.

Die Konsolen können als Winkelstücke mit zwei Schenkeln und einem diese verbindenden Eckbereich ausgebildet sein, wobei an den Enden der Schenkel Ausklinkungen zur Verbindung mit dem Winkelprofil sowie Klinken vorgesehen sind und im Eckbereich federnde Rastklinken ausgebildet sind, die zusammen mit den Klinken an den Enden der Schenkel die Befestigung der Rückwand bewirken.

Vorzugsweise sind die Konsolen aus Stahlblech gestanzt, gebogen und geschweißt.

Weitere Merkmale der Erfindung und Einzelheiten der durch dieselbe erzielten Vorteile ergeben sich aus der nachfolgenden Beschreibung einer in den beigefügten Figuren rein schematisch und beispielsweise dargestellten Ausführungsform der Kabelverzweigungsabdeckung und deren Einzelheiten.

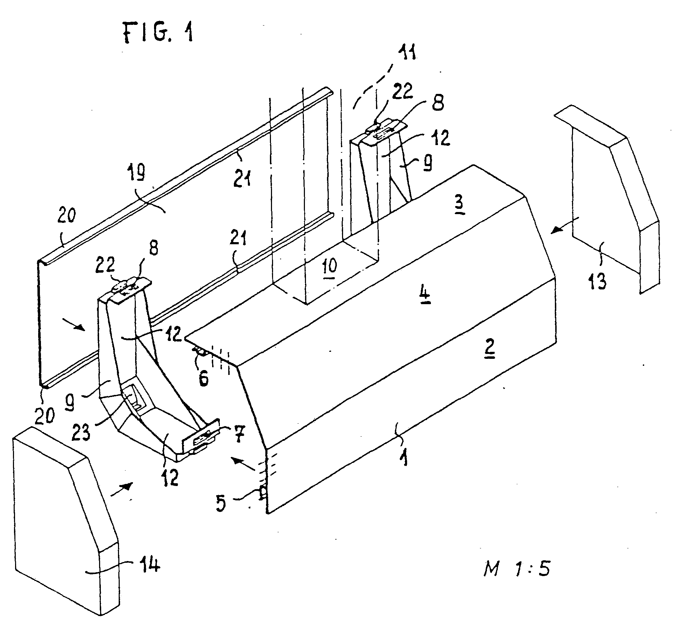

Fig. 1 zeigt eine Explosionsdarstellung der gesamten Abdeckung,

Fig. 2 gibt ein Endstück wieder, in

Fig. 3 ist eine Einzelheit im Schnitt nach der Linie III-III in Fig. 2 wiedergegeben,

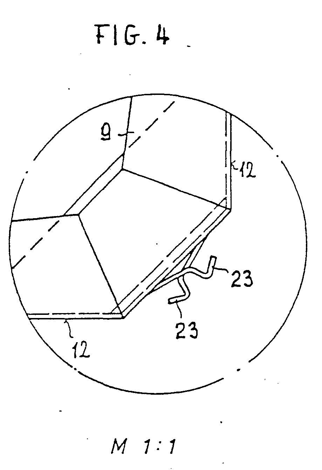

Fig. 4 zeigt schließlich eine Einzelheit im Eckbereich der Konsolen.

Die Kabelverzweigungsabdeckung besteht im wesentlichen aus einem Winkelprofil 1, das, wie dargestellt, eine Pultform aufweist, also aus einer Vorderwandung 2, einer im rechten Winkel zu dieser stehenden Deckenwandung 3 und einem verbindenden Pultbereich 4 besteht. Dieses Winkelprofil 1 ist vorzugsweise ein Strangpreßprofil aus Kunststoff und kann in der jeweils benötigten Länge von längeren Profilstücken abgeschnitten werden. An der Innenseite der beiden Wandungsbereiche 2, 3 sind federnde Rastleisten 5, 6 angespritzt, die in entsprechende Ausklinkungen 7, 8 an den als Winkelstücke ausgebildeten Konsolen 9 eingreifen. Eine Kabeleinführungsöffnung, die mit dem Ende des strichpunktiert angedeuteten Kabelführungskanals 11 korrespondiert, kann im Bereich 10, zum Beispiel in der Deckenwandung 3, leicht ausgeschnitten werden. Die offene Unterseite wird durch einen (nicht dargestellten) Schaltkasten verschlossen.

Die Konsolen 9, die vorzugsweise aus Blech bestehen, dienen zur Befestigung der Kabelverzweigungsabdeckung entweder auf dem Deckel eines Schaltkastens oder eines anderen zu verkabelnden Aggregates oder an einer rückseitigen Mauerwandung, an welcher beispielsweise auch der Kabelführungskanal 11 befestigt ist. Die Befestigung kann dabei mit die Schenkel 12 der Konsolen 9 durchdringenden beliebigen Befestigungsmitteln erfolgen.

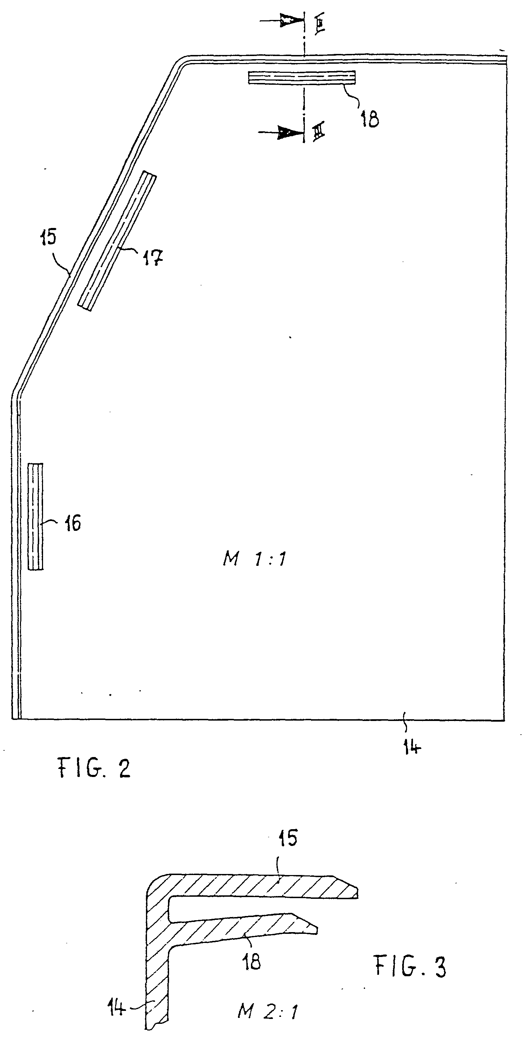

Die beiden offenen Stirnbereiche der mit dem Winkelprofil 1 gebildeten Abdeckung werden durch Endstücke 13 und 14 abgeschlossen, die spiegelbildlich ausgebildet sind. Sie folgen in ihrer Umrißform der Unrißgestaltung des Winkelprofils 1 und werden einfach über die Stirnkanten desselben geschoben. Als Befestigung dienen benachbart zum Rand 15 angeordnete Lippen 16, 17 und 18, deren Gestaltung sich insbesondere aus Fig. 3 ergibt. Die Endstücke 13 und 14 können mittels dieser Lippen mit Preßsitz auf die Stirnkanten des Winkelprofils 1 aufgeschoben werden.

Zusätzlich kann eine Rückwand 19 vorgesehen sein. Diese kann vorteilhafterweise ebenso von entsprechenden Strangpreßstücken abgeschnitten werden wie das Winkelprofil 1. Sie weist zwei Seitenbereiche 20 mit verdickten Kanten 21 auf, die hinter entsprechende Klinken 22 und 23 an den Konsolen 9 greifen können.

Bei viel Raum beanspruchenden Kabelverzweigungen kann die flache Rückwand durch ein weiteres Winkelprofil ersetzt werden, welches spiegelbildlich zu dem ersten, die Vorderseite bildenden Winkelprofil 1 angeordnet wird. Die Befestigung erfolgt durch ein weiteres Paar von Konsolen 9, welches Rücken an Rücken mit dem ersten Paar von Konsolen 9 montiert wird.

Um die Konsolen 9 in beliebiger Lage montieren zu können, sind im Eckbereich derselben zwei gegeneinander ausgerichtete Klinken 23 angeordnet, die die Verdickung 21 der Rückwand 19 federnd hintergreifen.

Mit der erfindungsgemäßen Kabelverzweigungsabdeckung ist eine einfache und vor allem preiswerte Lösung gefunden, die es ermöglicht, Kabelverzweigungen sicher gegen Umgebungseinflüsse abzudecken, und deren Hauptteile von einfachen Kunststoff-Strangpreßprofilen in beliebigen Längen abgeschnitten werden können.

## Patentansprüche

1. Kabelverzweigungsabdeckung für Kabeleingänge an Schaltkästen oder dergleichen, dadurch gekennzeichnet, daß sie im wesentlichen aus einem Winkelprofil (1) als Abdeckung für die Kabelverzweigung, Konsolen (9) zur Festlegung dieser Abdeckung im Bereich der Kabelverzweigung sowie zwei Endstücken (13, 14) zum seitlichen Verschluß des die Abdeckung bildenden Winkelprofils (1) besteht.

2. Kabelverzweigungsabdeckung nach Anspruch 1, dadurch gekennzeichnet, daß das Winkelprofil (1) als Zuschnitt aus einem stranggepreßten Kunststoffprofil ausgebildet ist.

3. Kabelverzweigungsabdeckung nach Anspruch 1 und 2, dadurch gekennzeichnet, daß eine auf das Winkelprofil (1) und/oder die Konsolen (9) aufrastbare Rückwand (19) vorgesehen ist.

4. Kabelverzweigungsabdeckung nach Anspruch 3, dadurch gekennzeichnet, daß die Rückwand (19) als Zuschnitt aus einem stranggepreßten Kunststoffprofil ausgebildet ist.

5. Kabelverzweigungsabdeckung nach Anspruch 1 bis 4, dadurch gekennzeichnet, daß die Konsolen (9) als Winkelstücke mit zwei Schenkeln (12) und einem diese verbindenden Eckbereich ausgebildet sind, daß an den Enden der Schenkel (12) Ausklinkungen (7, 8) zur Verbindung mit dem Winkelprofil (1) sowie Klinken (22) vorgesehen sind und daß im Eckbereich federnde Rastklinken (23) ausgebildet sind, die zusammen mit den Klinken (22) an den Enden der Schenkel (12) die Befestigung der Rückwand (19) bewirken.

6. Kabelverzweigungsabdeckung nach Anspruch 5, dadurch gekennzeichnet, daß die Konsolen (9) aus Stahlblech gestanzt, gebogen und geschweißt sind.

## Claims

1. A cable branch cover for cable inputs to switch boxes or the like, characterised in that it fundamentally comprises an angular section (1) as cover for the cable branch, brackets (9) which secure this cover in the region of the cable branch, and two end pieces (13, 14) which laterally close the angular section (1) which forms the cover.

2. A cable branch cover as claimed in Claim 1, characterised in that the angular section (1) consists of a blank cut from an extruded synthetic resin section.

3. A cable branch cover as claimed in Claim 1 and 2, characterised in that a rear wall (19) is provided which can be engaged onto the angular section (1) and/or the brackets (9).

4. A cable branch cover as claimed in Claim 3, characterised in that the rear wall (19) consists of a blank cut from an extruded synthetic resin section.

5. A cable branch cover as claimed in Claim 1 to 4, characterised in that the brackets (9) consist of angular components having two flanks (12) and a corner zone connecting the flanks, that notches (7, 8), which are to be connected to the angular section (1), and detents (22) are provided at the ends of the flanks (12) and that resilient latches (23) are arranged in the corner zone which, together with the detents (22) at the ends of the flanks (12), serve to secure the rear wall (19).

6. A cable branch cover as claimed in Claim 5, characterised in that the brackets (9) are punched, bent and welded from steel plate.

## Revendications

1. Couvercle pour branchement de câbles, pour des entrées de câbles dans des coffrets électriques ou similaires, caractérisé en ce qu'il est constitué pour l'essentiel d'un profilé coudé (1) comme élément de recouvrement pour le branchement de câbles, de consoles (9) pour la fixation de cet élément de recouvrement dans la région du branchement de câbles, ainsi que de deux éléments terminaux (13, 14) pour la fermeture latérale du profilé coudé (1) constituant l'élément de recouvrement.

2. Couvercle pour branchement de câbles selon la revendication 1, caractérisé en ce que le profité coudé (1) est réalisé sous la forme d'une découpe à partir d'un profilé en matière plastique extrudée.

3. Couvercle pour branchement de câbles selon les revendications 1 et 2, caractérisé en ce qu'il est prévu une paroi arrière (19) qui peut être enclenchée sur le profilé coudé (I) et/ou sur les consoles (9).

4. Couvercle pour branchement de câbles selon la revendication 3, caractérisé en ce que la paroi arrière (19) est réalisée sous la forme d'une découpe à partir d'un profilé en matière plastique extrudée.

5. Couvercle pour branchement de câbles selon l'une des revendications 1 à 4, caractérisé en ce que les consoles (9) sont réalisées sous la forme de pièces coudées avec deux branches (12) et une région de coin reliant ces branches, en ce qu'il est prévu, aux extrémités des branches (12), des encoches (7, 8) pour l'assemblage avec le profilé coudé (1), ainsi que des clenches (22), et en ce que des clenches de crantage élastiques (23) sont configurées dans la région de coin, lesquelles engendrent, conjointement avec les clenches (22) prévues aux extrémités des branches (12), la fixation de la paroi arrière (19).

6. Couvercle pour branchement de câbles selon la revendication 5, caractérisé en ce que les consoles (9) sont réalisées en tôle d'acier découpée, pliée et soudée.

FIG. 1

M 1:5

FIG. 2

M 1:1

FIG. 3

M 2:1

2

FIG. 4

M 1:1